# EUROPÄISCHE PATENTSCHRIFT

(11) **EP 0 671 641 B1**
(45) Veröffentlichungstag und Bekanntmachung des Hinweises auf die Patenterteilung: **12.12.2001**
(21) Anmeldenummer: 94114891.8
(22) Anmeldetag: 21.09.1994
(51) Int. Cl.: G02B 5/20, G02B 1/10, C03C 17/36

(54) **Mehrlagige Beschichtung**
Multilayer coating
Revêtement à multicouches

(30) Priorität: 07.03.1994 DE 4407502
(43) Veröffentlichungstag der Anmeldung: 13.09.1995
(73) Patentinhaber: Applied Films GmbH & Co. KG, 63755 Alzenau (DE)
(72) Erfinder: Braatz, Christoph, D-63512 Hainburg (DE); Szczyrbowski, Joachim Dr.-Physiker, D-63773 Goldbach (DE); Zmelty, Anton Dipl.-Ing., D-63768 Hösbach (DE)
(74) Vertreter: Bockhorni, Josef, Dipl.-Ing.

(56) Entgegenhaltungen:
- EP-A- 0 336 257
- WO-A-90/02653
- DE-A- 3 906 374
- US-A- 3 034 924
- US-A- 3 682 528

## Beschreibung

Die Erfindung betrifft eine mehrlagige Beschichtung für eine aus für sichtbares Licht gut durchlässigem Material bestehende Unterlage, mit niedrigem Wärmeemissionsvermögen, hoher Lichttransmission und definierten Farbkoordinaten.

Bekannt ist ein optisches Filter (DE 21 44 242), bei dem auf der einen Seite einer aus für sichtbares Licht gut durchlässigem Material bestehenden Unterlage ein Belag angebracht ist, der eine erste und eine zweite Doppelschicht aufweist, von denen jede eine Vorschicht, die von einem Metall (Nickel) gebildet ist und eine Schicht aus Silber enthält, und bei dem zumindest zwischen den beiden Doppelschichten eine Schicht aus einem vorgewählten, durchsichtigen dielektrischen Material, z.B. Magnesiumfluorid oder Titandioxid vorgesehen ist, dessen optische Dicke etwa eine Viertelwellenlänge bei einer vorgewählten Bezugswellenlänge im sichtbaren Bereich von 400 bis 700 nm beträgt, wobei die Dicke jeder dieser Silberschichten zwischen 55 und 130 Angström beträgt und jede der beiden Vorschichten eine Dicke oberhalb eines Mindestwertes von etwa 5 Angström und mit einem Höchstwert aufweist, der dadurch bestimmt ist, daß sich die Durchlässigkeit beim Auftragen der Vorschicht um etwa 2 % verändern darf, so daß die Durchlässigkeitsgüte des Filters nicht merklich beeinträchtigt wird.

Diese bekannte mehrlagige Beschichtung betrifft ein optisches Filter, dessen Silberschichten äußerst dünn bemessen sind, sich aber dennoch im wesentlichen wie massive Metallplatten verhalten und mit großer Annäherung dieselben optischen Eigenschaften aufweisen wie massives Silber, und das sich für eine reproduzierbare industrielle Herstellung eignet und eine gute Haltbarkeit, insbesondere Feuchtigkeits- und Abriebsbeständigkeit aufweist.

Bekannt ist weiterhin ein Verfahren zur Herstellung eines Schutzbelages für optische Zwecke (US 3 034 924), der aus auf die Unterlage aufgedampften Metalloxiden, z.B. Magnesiumoxiden und simultan mit diesen aufgedampften Seltenerdmetallen besteht. Dieses bekannte Verfahren ermöglicht das Aufbringen dünner Oxid-schichten auf der Basis von Oxiden und/oder oxidierbaren Ausgangsmaterialien bzw. ein wirtschaftliches Aufbringen mehrerer Schichten verschiedener Materialien, insbesondere Metallen und Seltenerdmetallen, derart, daß die Schichten teilweise absorptionsfrei bleiben.

Bekannt ist schließlich ein Schichtpaket für Glasfenster zur Verminderung der Sonneneinstrahlung (US 4 965 121), das zwei Silberschichten umfaßt, von denen die eine Schicht eine geringere Dicke aufweist, als die andere Schicht und bei der den beiden Silberschichten benachbart Schichten aus dielektrischem Werkstoff, beispielsweise aus Magnesiumoxid, angeordnet sind. Die derart mit fünf Schichten versehene Glasscheibe soll sich insbesondere auch als Windschutzscheibe für Automobile eignen, da das Schichtpaket eine weitgehend neutrale Färbung aufweisen kann.

Low-e-Schichten haben im allgemeinen eine Emissivität von ca. 0,1 und eine Lichttransmission von etwa 83 %, wobei die Emissivität den Wärmedurchganskoeffizienten "k" einer Fensterverglasung bestimmt. Bei Senkung der Emissivität von 0,1 auf z.B. 0,04 würde der k-Koeffizient um etwa 15 % abgesenkt, d.h. der Wärmeenergieverlust durch ein Fenster würde damit reduziert um etwa den gleichen prozentualen Betrag.

Aufgabe der vorliegenden Erfindung ist die preiswerte und problemlose Herstellung einer Low-e-Beschichtung mit einer Emissivität e < 0,04 und einer Lichttransmission T ≥ 79 %.

Gemäß der vorliegenden Erfindung wird diese Aufgabe mit Hilfe von einem Interferenzfilter gemäß Anspruch 1 oder Anspruch 2 mit zwei Ag-Schichten und drei Oxid-Schichten gelöst; wobei als Blocker sehr dünne Metall- oder Metallsuboxide, z.B. Ti, Ni, NiCr, Al, Zr einsetzbar sind.
Substrat|Oxid|Ag|Blocker|Oxid|Ag|Blocker|Oxid

Um, bei der erforderlichen Emissivität, die entsprechend hohe Lichttransmission zu erreichen, dürfen sowohl die Oxid- als auch die Blockerschichten kaum Absorption zeigen.

Als Oxidschicht ist eine SnX-Legierung vorgesehen, wobei als X ein Element zu wählen ist, das eine kleinere Elektro-Negativität (En) aufweist, als das Sn (En = 1,96), z.B. Mg(En=1,3), Al(1,61), Zr(1,33), Ti(1,4), Ta(1,5). Weiterhin soll der Beitrag des X-Elementes in der Sn-Legierung kleiner als 15 at % % sein. Besonders geeignet ist hier Mg, das in diesem Bereich mit Sn ein Eutektikum bilden.

Erfindungsgemäß weisen die beiden Ag-Schichten verschiedene Dicken auf, wobei die Dicke der zweiten Ag-Schicht größer ist und die Gesamtdicke so ausgewählt ist, daß die Emissivität dem gewünschten Wert entspricht. Erfindungsgemäß kann darüberhinaus anstelle von Silber auch Gold, Kupfer oder Aluminium als Wärmedämmschicht Verwendung finden.

Eine SnMg-Oxidschicht kann direkt bzw. nur mit sehr dünnem Blocker auf die Silberschicht reaktiv gesputtert werden, ohne daß die dünne Ag-Schicht durch Sauerstoffionen angegriffen wird (was bei konventionellen Oxiden, wie z.B. bei SnO₂ oder ZnO u.a.m. nicht möglich ist). Damit erreicht man bei der gleichen Emissivität der Silberschicht höhere Lichttransmission.

Überraschenderweise wird während des Sputterns, durch katalytisches Verhalten des X-Elements die Reaktionsgeschwindigkeit des Sn zum SnO₂ beschleunigt. Als Ergebnis wird der Sauerstoffüberschuß in der Sputterkammer stark reduziert, und damit auch die zerstörende Wirkung der Sauerstoffionen auf Ag stark gemindert. Dies erlaubt, die Blockerschicht entweder ganz zu beseitigen oder nur sehr dünn zu sputtern.

Überraschenderweise ist auch die Leitfähigkeit einer Ag-Schicht, gesputtert auf SnX-Legierungsoxid ist höher als für eine Ag-Schicht, gesputtert auf Sn-Oxid. Dies bedeutet, daß auch durch diesen Effekt die Lichttransmission der Schichtsysteme bei gleicher Emissivität gesteigert werden kann.

Die Erhöhung der Schichtdicke der zweiten Ag-Schicht führt überraschenderweise zu einer wesentlichen Erhöhung der Lichttransmission der Gesamtbeschichtung infolge der besseren Entspiegelung des Schichtsystems.

### Beispiele

Alle Oxidschichten wurden bei den nachstehend beschriebenen Beispielen aus Metalltargets Sn oder SnMg (90/10 at. %) im reaktiven Sputterprozeß in einer Argon-Sauerstoff-Atmosphäre hergestellt. Der Sputterdruck war ca. 3 x 10⁻³ mbar. Die Blockerschicht wurde suboxidisch gesputtert, d.h. in einer Argon-Sauerstoff-Atmosphäre, aber auf den metallischen Ast der Katodencharakteristik.

Die Silberschichten wurden in Argon-Atmosphäre gesputtert.
Die Farbkoordinaten wurden mit C 2°-Normallichtart gemessen:
1. Low-e-Beschichtung mit SnO₂-Oxid gemäß dem Stand der Technik

| | SnO₂ | Ag | NiCr | SnO₂ | Ag | NiCr | SnO₂ |
|---|---|---|---|---|---|---|---|
| Dicke in Å | 440 | 100 | 17 | 840 | 140 | 17 | 350 |
| Flächenwiderstand | | R. | | 3,0 Ω | | | |
| Lichttransmission | | T | | 74 % | | | |
| Farbkoordinaten | | a* | | -3,4 | | | |
| | | b* | | 2,9 | | | |
| Reflexion Filmseite | | R_{f} | | 3,8 % | | | |
| | | a* | | -4,2 | | | |
| | | b* | | 2,7 | | | |
| Reflexion Glasseite | | R_{g} | | 4,4 % | | | |
| | | a* | | -1,1 | | | |
| | | b* | | -0,1 | | | |

2. Low-e-Beschichtung mit SnMgO₂-Oxid mit NiCr-Blocker gemäß der vorliegenden Erfindung

| | SnMgO₂ | Ag | NiCr | SnMgO₂ | Ag | NiCr | SnMgO₂ |
|---|---|---|---|---|---|---|---|
| Dicke in Å | 440 | 100 | 7 | 840 | 140 | 7 | 350 |
| Flächenwiderstand | | R. | | 2,5 Ω | | | |
| Lichttransmission | | T | | 78 % | | | |
| Farbkoordinaten | | a* | | -4,1 | | | |
| | | b* | | 2,8 | | | |
| Reflexion Filmseite | | R_{f} | | 5,5 % | | | |
| Farbkoordinaten | | a* | | -1,2 | | | |
| | | b* | | 2,2 | | | |
| Reflexion Glasseite | | R_{g} | | 5,5 % | | | |
| Farbkoordinaten | | a* | | -1,1 | | | |
| | | b* | | -3,8 | | | |

3. Low-e-Beschichtung mit SnMgO₂-Oxid ohne Blocker gemäß der vorliegenden Erfindung

| | SnMgO₂ | Ag | NiCr | SnMgO₂ | Ag | NiCr | SnMgO₂ |
|---|---|---|---|---|---|---|---|
| Dicke in Å | 440 | 100 | - | 840 | 140 | - | 350 |
| | | | | | | | |
| Flächenwiderstand | | R. | | 2,6 Ω | | | |
| Lichttransmission | | T | | 80 % | | | |
| Farbkoordinaten | | a* | | -3,8 | | | |
| | | b* | | 2,7 | | | |
| Reflexion Filmseite | | R_{f} | | 5,4 % | | | |
| Farbkoordinaten | | a* | | -2,4 | | | |
| | | b* | | 1,6 | | | |
| Reflexion Glasseite | | R_{g} | | 5,4 % | | | |
| Farbkoordinaten | | a* | | -2,0 | | | |
| | | b* | | -2,1 | | | |

## Patentansprüche

1. Mehrlagige Beschichtung für eine aus für sichtbares Licht gut durchlässigem Material bestehenden Unterlage, mit niedrigem Wärmeemissionsvermögen, hoher Lichttransmission und definierten Farbkoordinaten, bestehend aus:
a) einer auf der Oberfläche der Unterlage abgeschiedenen ersten Lage aus Oxiden der Metall-Legierung SnX, wobei X eines der Metalle Mg, Al, Zr, Ti oder Ta ist und der Anteil von X kleiner als 15 Atomprozent ist,
b) einer auf der Metalloxid-Lage abgeschiedenen ersten Silberschicht geringerer Dicke,
c) einer auf der ersten Silberschicht abgeschiedenen dünnen metallischen oder teiloxidischen Lage der Metalle Ti, Zr, In, deren Legierungen, oder der Metall-Legierung NiCr,
d) einer auf der dünnen metallischen oder teiloxidischen Lage abgeschiedenen zweiten Metalloxid-Lage der unter a) genannten Art,
e) einer auf der zweiten metalloxidischen Lage abgeschiedenen zweiten Silberschicht größerer Dicke,
f) einer auf der zweiten Silberschicht abgeschiedenen zweiten dünnen metallischen oder teiloxidischen Lage der unter c) genannten Art und
g) einer dritten metalloxidischen Lage der unter a) genannten Art.

2. Mehrlagige Beschichtung für eine aus für sichtbares Licht gut durchlässigem Material bestehenden Unterlage, mit niedrigem Wärmeemissionsvermögen, hoher Lichttransmission und definierten Farbkoordinaten, bestehend aus
a) einer auf der Oberfläche der Unterlage abgeschiedenen ersten Lage aus Oxiden der Metall-Legierung SnX, wobei X eines der Metalle Mg, Al, Zr, Ti oder Ta ist und der Anteil von X kleiner als 15 Atomprozent ist,
b) einer auf der Metalloxidschicht abgeschiedenen ersten Silberschicht geringerer Dicke,
c) einer auf der ersten Silberschicht abgeschiedenen zweiten Metalloxid-Lage der unter a) genannten Art,
d) einer auf der zweiten metalloxidischen Lage abgeschiedenen zweiten Silberschicht größerer Dicke und
e) einer dritten metalloxidischen Lage der unter a) genannten Art.

## Claims

1. Multilayer coating for a substrate comprising a material which is highly translucent to visible light and having a low thermal emissivity, high light transmission and defined colour coordinates, comprising:
(a) a first layer deposited on the surface of the substrate comprising oxides of the metal alloy SnX, whereby X is one of the metals Mg, Al, Zr, Ti, or Ta and the proportion of X is smaller than 15 atom percent,
(b) a first silver layer of smaller thickness deposited on the metal oxide layer,
(c) a thin metallic or partly oxidic layer of the metals Ti, Zr, In, alloys thereof or the metal alloy NiCr deposited on the first silver layer,
(d) a second metal oxide layer of the type referred to under (a) deposited on the thin metallic or partially oxidic layer,
(e) a second silver layer of greater thickness deposited on the second metal oxide layer,
(f) a second thin metallic or partially oxidic layer of the type referred to under (c) deposited on the second silver layer and
(g) a third metal oxide layer of the type referred to under (a).

2. Multilayer coating for a substrate comprising a material which is highly translucent to visible light and having a low thermal emissivity, high light transmission and defined colour coordinates, comprising:
(a) a first layer deposited on the surface of the substrate comprising oxides of the metal alloy SnX, whereby X is one of the metals Mg, Al, Zr, Ti, or Ta and the proportion of X is smaller than 15 atom percent,
(b) a first silver layer of smaller thickness deposited on the metal oxide layer,
(c) a second metal oxide layer of the type referred to under (a) deposited on the first silver layer,
(d) a second silver layer of greater thickness deposited on the second metal oxide layer,
(e) a third metal oxide layer of the type referred to under (a).

## Revendications

1. Revêtement multicouche pour un support se composant d'un matériau qui laisse bien passer la lumière visible, avec un faible pouvoir thermoémissif, une transmission élevée de la lumière et des coordonnées chromatiques définies, consistant en :
a) une première couche déposée sur la surface du support, en oxydes de l'alliage métallique SnX, où X est l'un des métaux Mg, Al, Zr, Ti ou Ta et la proportion de X est inférieure à 15% en atomes ;
b) une première couche en argent, déposée sur la couche d'oxyde métallique, de plus faible épaisseur ;
c) une couche métallique ou partiellement oxydique fine, déposée sur la première couche en argent, des métaux Ti, Zr, In, leurs alliages, ou l'alliage métallique NiCr ;
d) une deuxième couche en oxyde métallique du type mentionné sous a), déposée sur la couche métallique ou partiellement oxydique fine ;
e) une deuxième couche en argent de plus grande épaisseur, déposée sur la deuxième couche en oxyde métallique ;
f) une deuxième couche métallique ou partiellement oxydique fine, du type mentionné sous c), déposée sur la deuxième couche en argent, et
g) une troisième couche en oxyde métallique, du type mentionné sous a).

2. Revêtement multicouche pour un support se composant d'un matériau qui laisse bien passer la lumière visible, avec un faible pouvoir thermoémissif, une transmission élevée de la lumière et des coordonnées chromatiques définies, consistant en :
a) une première couche déposée sur la surface du support, en oxydes de l'alliage métallique SnX, où X est l'un des métaux Mg, Al, Zr, Ti ou Ta et la proportion de X est inférieure à 15% en atomes ;
b) une première couche en argent, déposée sur la couche d'oxyde métallique, de plus faible épaisseur ;
c) une deuxième couche en oxyde métallique du type mentionné sous a), déposée sur la couche première couche en argent ;
d) une deuxième couche en argent de plus grande épaisseur, déposée sur la deuxième couche en oxyde métallique, et
e) une troisième couche en oxyde métallique, du type mentionné sous a).
